# EUROPÄISCHE PATENTSCHRIFT

(11) **EP 0 643 303 B1**
(45) Veröffentlichungstag und Bekanntmachung des Hinweises auf die Patenterteilung: **10.11.1999**
(21) Anmeldenummer: 94112166.7
(22) Anmeldetag: 04.08.1994
(51) Int. Cl.: G01N 31/16

(54) **Verwendung von N-Methylformamid als Lösungsmittel für die Karl-Fischer-Titration**
Usage of N-methylformamide as solvent for the Karl Fischer titration
Utilisation du N-méthylformamide dans un solvant pour la titration selon Karl Fischer

(30) Priorität: 31.08.1993 DE 4329287
(43) Veröffentlichungstag der Anmeldung: 15.03.1995
(73) Patentinhaber: Rdh Laborchemikalien GmbH & Co. KG, 30926 Seelze (DE)
(72) Erfinder: Scholz, Eugen, Dr., D-30823 Garbsen (DE)
(74) Vertreter: Geissler, Bernhard, Dr. jur., Dipl.-Phys.

(56) Entgegenhaltungen:
- EP-A- 0 135 098
- EP-A- 0 206 017
- EP-A- 0 299 310
- ANALYTICA CHIMICA ACTA, Bd.239, 1990, AMSTERDAM, NL Seiten 283 - 290 G. WÜNSCH ET AL.
- ANALYTICAL CHEMISTRY, Bd.63, Nr.10, 15. Mai 1991, WASHINGTON, DC, US Seiten 557A - 566A, XP217463 S. K. MACLEOD
- JOURNAL OF ANALYTICAL CHEMISTRY OF USSR, Bd.35, Nr.11, November 1980, NEW YORK US Seiten 1426 - 1429 S. I. PETROV ET AL.

## Beschreibung

Die Karl-Fischer-Titration zur Wasserbestimmung zählt zu den Standard-Methoden der analytischen Chemie und ist in der Literatur umfangreich beschrieben. Sie wird in zwei Grundformen ausgeführt, und zwar als volumetrische Titration und als coulometrische Titration.

Bei der volumetrischen Titration gibt es zwei Varianten. In den meisten Fällen wird mit einem Einkomponenten-Reagenz titriert, d. h. mit einer Reagenzlösung, die Schwefeldioxid, eine oder mehrere Basen, Jod und ein geeignetes Lösungsmittel enthält, das heute bevorzugt 2-Methoxyethanol ist. Für die Ausführung einer derartigen Titration wird die Probe in einem Lösungsmittel gelöst und dann mit dem KF-Einkomponenten-Reagenz titriert. Das bevorzugte Lösungsmittel ist Methanol.

Eine Variante der volumetrischen Titration ist das Arbeiten mit einem Zweikomponenten-Reagenz, bestehend aus einer Solvent-Komponente, die Schwefeldioxid, eine oder mehrere Basen und Methanol als Lösungsmittel und einer Titrant-Komponente, die eine Lösung von Jod in einem geeigneten Lösungsmittel wie Methanol oder Xylol ist. Die Solvent-Komponente wird als Lösungsmittel für die Probe verwendet. Titriert wird mit der Titrant-Komponente.

Bei der coulometrischen Bestimmung wird das Jod durch anodische Oxidation erzeugt und reagiert dann in bekannter Weise mit den anderen Komponenten des KF-Systems. Bei der bevorzugten Form der Coulometrie besteht die coulometrische Zelle aus einem großen Anodenraum, in dem die KF-Reaktion abläuft und einem kleinen Kathodenraum, in dem eine adäquate Kathodenreaktion abläuft. Das Reagenz für den Anodenraum besteht normalerweise aus Schwefeldioxid, einer oder mehreren Basen, einem löslichen Jodid und einem alkoholischen Lösungsmittel, bevorzugt Methanol. Die Reagenzlösung muß einen Mindestleitwert haben, damit der für die Reaktion erforderliche Strom fließen kann. Aus diesem Grunde werden gelegentlich Leitsalze zugesetzt. Das Reagenz für den Kathodenraum muß eine adäquate Leitfähigkeit haben und eine Kathodenreaktion ermöglichen. Vorwiegend werden dafür KF-Reagenzien ähnlicher Zusammensetzung benutzt.

Eine Variante der Coulometrie ist die Verwendung der diaphragmalosen Zelle, so daß nur ein Reagenz verwendet werden muß. Dafür geeignete Reagenzlösungen entsprechen im Prinzip der Zusammensetzung, die oben als Reagenz für den Anodenraum bezeichnet wurde.

Die Grundformen der Karl-Fischer-Titration werden in der Praxis modifiziert, wenn die zu untersuchende Substanz dies erfordert. Zur Analyse von fettartigen Substanzen werden die verwendeten Reagenzlösungen mit Chloroform, Xylol oder langkettigen Alkoholen (EP 0299 310) versetzt, um das Lösungsvermögen für diese Substanzen zu verbessern.

Soweit die üblicherweise verwendeten Alkohole - bevorzugt Methanol - mit den zu untersuchenden Proben reagieren, z. B. mit Aldehyden oder Ketonen, werden substituierte Alkohole bevorzugt (EP 0135 098).

Dem Zusatz von anderen Lösungsmitteln sind Grenzen gesetzt. Langkettige oder substituierte Alkohole ermöglichen zwar die Analyse von Kohlenwasserstoffen oder von Ketonen, stören aber gleichzeitig den Ablauf der Karl-Fischer-Titration. Bei den coulometrischen Reagenzien setzen sie den Leitwert der Karl-Fischer-Lösung soweit herab, daß die Geräte nicht mehr funktionsfähig sind. Bei der volumetrischen Bestimmung verschieben sie in höherer Konzentration die Endpunktsindikation, so daß die Geräte übertitrieren und die Resultate verfälschen. Generell gilt die Erkenntnis, daß ein Karl-Fischer-Reagenz einen Alkohol enthält, da andernfalls der stöchiometrische Ablauf verändert wird (Scholz, Karl-Fischer-Titration, Springer-Verlag 1984, Seite 5).

Überraschenderweise wurde nun gefunden, daß unter Verwendung von N-Methylformamid als Lösungsmittel Karl-Fischer-Reagenzien hergestellt werden können, die in gleicher Weise wie die alkoholhaltigen Reagenzien reagieren. Sie zeigen den gleichen stöchiometrischen Reaktionsablauf, d. h. das Verhältnis H₂O : J₂ ist 1 : 1, wie in alkoholischen Lösungen. Darüber hinaus zeigen sie eine Reihe von zusätzlichen Vorteilen. N-Methylformamid hat ein gutes Lösungsvermögen für polare Verbindungen und gibt mit gelösten Salzen hohe Leitwerte. Somit sind Karl-Fischer-Reagenzien auf Basis N-Methylformamid für die coulometrische Wasserbestimmung hervorragend geeignet. Bei der volumetrischen Titration ergeben sie aus dem gleichen Grunde einen scharfen Endpunkt und damit genaue Resultate.

Die bei Alkoholen auftretende Nebenreaktion, z. B. die Ketalbildung bei Ketonen bzw. die Reaktion mit Silanol-Gruppen, können bei N-Methylformamid nicht auftreten, so daß dieses Lösungsmittel und die damit hergestellten Reagenzien hervorragend für die Wasserbestimmung in Ketonen geeignet sind.

Vergleichbare Lösungsmittel wie Formamid und N,N-Dimethylformamid wurden erprobt und erwiesen sich als ungeeignet. Formamid gibt eine Nebenreaktion, die eine rasche Zersetzung von Einkomponenten-Reagenzien verursacht und bei daraus hergestellten Reagenzien eine stabile Endpunktseinstellung verhindert (Wünsch, Schöffski, Analytica Chimica Acta 239 (1990) 283 - 290). Dimethylformamid gibt Reagenzien, bei denen die Stöchiometrie verschoben ist. Der "Titer" dieser Reagenzien hängt vom Lösungsmittel ab, das für die Proben verwendet wird (Scholz, Seite 5).

N-Methylformamid kann in allen Formen der Karl-Fischer-Titration verwendet werden, bei der volumetrischen Titration mit einem Einkomponenten-Reagenz oder mit einem Zweikomponentenreagenz und bei der coulometrischen Titration in der Zweikammer- und Einkammer-Zelle. Alle üblichen Karl-Fischer-Basen wie z. B. Pyridin, Imidazol und Aminoalkohole können verwendet werden. Beispiele für derartige Reagenzien sind im folgenden wiedergegeben.

N-Methylformamid kann auch im Gemisch mit anderen Lösungsmitteln wie Chloroform, Xylol, Alkoholen oder alkoholischen Reagenzien verwendet werden, so daß die Lösungsmittelkombination von N-Methylformamid mit Alkoholen und/oder anderen Lösungsmitteln an die Erfordernisse der Probe angepaßt werden kann.

### Beispiel 1:

140 g Imidazol werden in 1000 g N-Methylformamid gelöst. Dann werden unter Kühlung 60 g Schwefeldioxid eingeleitet, so daß die Temperatur 30°C nicht übersteigt. Abschließend werden 60 g Jod zugesetzt. Die Lösung bleibt über Nacht stehen. Dann wird ihr Wirkwert (Titer) ermittelt.

### Beispiel 2:

Die Solvent-Komponente eines Zweikomponenten-Reagenzes wird hergestellt, indem 160 g Pyridin in 1000 g N-Methylformamid gelöst werden. Anschließend werden 64 g SO₂ eingeleitet, wobei die Temperatur durch Kühlung unterhalb 30 °C gehalten wird.

### Beispiel 3:

Die Titrant-Komponente eines Zweikomponenten-Reagenzes wird hergestellt, indem 60 g Jod in 1000 g N-Methylformamid gelöst werden.

### Beispiel 4:

Ein coulometrisches Reagenz wird hergestellt, indem 105 g Imidazol in 1000 g N-Methylformamid gelöst werden. Unter Kühlung werden 64 g Schwefeldioxid eingeleitet, und abschließend werden 20 g Imidazolhydrojodid zugesetzt. Das so hergestellte Reagenz kann im Anodenraum der coulometrischen Zweikammer-Zelle oder als Universal-Elektrolyt in der Einkammer-Zelle verwendet werden.

### Beispiel 5:

Für die Verwendung im Kathodenraum werden 210 g Diethanolaminhydrochlorid in 1000 g N-Methylformamid gelöst.

### Beispiel 6:

105 g Diethanolamin und 60 g Imidazol werden in 500 g N-Methylformamid und 500 ml Methanol gelöst. Dann werden unter Kühlung 94 g Schwefeldioxid eingeleitet. Anschließend werden 40g Natriumjodid zugesetzt. Dieses Reagenz kann als Solvent-Komponente für ein Zweikomponenten-Reagenz oder als coulometrisches Reagenz verwendet werden.

### Anwendungsbeispiele

Die Anwendungsbeispiele basieren auf den heute üblichen Formen der Karl-Fischer-Titration. Bei der Volumetrie wird das Lösungsmittel (beim Zweikomponenten-Reagenz die Solvent-Komponente) in einem geeigneten Titriergefäß vorgelegt. Dann wird die Probe zugesetzt und mit dem Karl-Fischer-Reagenz (oder der Titrant-Komponente) titriert. Vor dem Zusatz der Probe kann das Lösungsmittel in einer Vortitration trockentitriert (entwässert) werden. Dann wird die Probe zugesetzt und in gleicher Weise titriert.

Bei der Coulometrie wird das Reagenz in die Titrierzelle handelsüblicher Geräte eingefüllt, wobei Zweikammer- und Einkammerzelle üblich sind. Nach dem Einschalten der Geräte werden die eingefüllten Reagenzien automatisch trockentitriert. Die Probe wird dann entsprechend den Vorschriften für das Gerät zugesetzt und analysiert.

### Anwendungsbeispiel 1

In der volumetrischen Titrierzelle wird Methanol vorgelegt. Die wasserhaltige Probe wird zugesetzt und mit einem Titriermittel nach Beispiel 1 titriert.

### Anwendungsbeispiel 2

In der volumetrischen Titrierzelle wird N-Methylformamid vorgelegt. Die wasserhaltige Probe wird zugesetzt und mit einem Titriermittel nach Beispiel 1 titriert.

### Anwendungsbeispiel 3

In der volumetrischen Titrierzelle wird N-Methylformamid vorgelegt. Die wasserhaltige Probe wird zugesetzt und mit einem handelsüblichen Karl-Fischer-Reagenz nach DAB 10 titriert.

### Anwendungsbeispiel 4

In der volumetrischen Titrierzelle wird die Solvent-Komponente nach Beispiel 2 vorgelegt. Die wasserhaltige Probe wird zugesetzt und mit einem Titriermittel nach Beispiel 3 titriert.

### Anwendungsbeispiel 5

In der volumetrischen Titrierzelle wird die Solvent-Komponente nach Beispiel 2 vorgelegt. Die wasserhaltige Probe wird zugesetzt und mit der Titrant-Komponente nach Beispiel 3 titriert.

### Anwendungsbeispiel 6

In der volumetrischen Titrierzelle wird die Solvent-Komponente nach Beispiel 2 vorgelegt. Die wasserhaltige Probe wird zugesetzt und mit einer handelsüblichen Titrant-Komponente (z.B. einer Lösung von 65 g Jod in Methanol) titriert.

### Anwendungsbeispiel 7

In der volumetrischen Titrierzelle wird eine handelsübliche Solvent-Komponente vorgelegt, die z. B. aus 120 g Pyridin und 60g Schwefeldioxid gelöst in Methanol besteht. Die wasserhaltige Probe wird zugesetzt und mit der Titrant-Komponente nach Beispiel 3 titriert.

### Anwendungsbeispiel 8

In einer coulometrischen Zelle eines handelsüblichen Karl-Fischer-Coulometers, die 2 getrennte Kammern hat, wird in den Anodenraum das Reagenz nach Beispiel 4 eingefüllt. In den Kathodenraum wird das Reagenz nach Beispiel 5 eingefüllt. Mit diesen Reagenzien wird das Wasser in entsprechender Weise bestimmt.

### Anwendungsbeispiel 9

In einer coulometrischen Zelle eines handelsüblichen Karl-Fischer-Coulometers, die nur eine Kammer hat, wird das Reagenz nach Beispiel 6 eingefüllt. Mit diesem Reagenz wird das Wasser in entsprechender Weise bestimmt.

## Patentansprüche

1. Wasserbestimmung nach der Methode Karl Fischer, dadurch gekennzeichnet, daß N-Methylformamid als Lösungsmittel verwendet wird.

2. Wasserbestimmung mit einem Einkomponenten-Reagenz nach Karl Fischer gemäß Anspruch 1, dadurch gekennzeichnet, daß N-Methylformamid als Lösungsmittel für das Reagenz verwendet wird.

3. Wasserbestimmung mit einem Einkomponenten-Reagenz nach Karl Fischer gemäß Anspruch 1, dadurch gekennzeichnet, daß N-Methylformamid als Arbeitsmedium bzw. Lösungsmittel für die Probe verwendet wird.

4. Wasserbestimmung gemäß Anspruch 1 mit einem Zweikomponenten-Reagenz nach Karl Fischer, bestehend aus einer Solvent-Komponente, die Schwefeldioxid und eine oder mehrere Basen enthält, und einer Titrant-Komponente, die eine Jodlösung ist, dadurch gekennzeichnet, daß die Solvent-Komponente N-Methylformamid als Lösungsmittel enthält.

5. Wasserbestimmung gemäß Anspruch 1 mit einem Zweikomponenten-Reagenz nach Karl Fischer, bestehend aus einer Solvent-Komponente, die Schwefeldioxid und eine oder mehrere Basen enthält, und einer Titrant-Komponente, die eine Jodlösung ist, dadurch gekennzeichnet, daß die Titrant-Komponente N-Methylformamid als Lösungsmittel enthält.

6. Coulometrische Wasserbestimmung in einer Zweikammer-Zelle nach Karl Fischer gemäß Anspruch 1 unter Verwendung eines Anoden-Reagenzes, das Schwefeldioxid, eine oder mehrere Basen und ein lösliches Jodid enthält, dadurch gekennzeichnet, daß das Anoden-Reagenz N-Methylformamid als Lösungsmittel enthält.

7. Coulometrische Wasserbestimmung in einer Zweikammer-Zelle nach Karl Fischer gemäß Anspruch 1 unter Verwendung eines Elektrolyten im Kathodenraum, der ein oder mehrere lösliche Leitsalze enthält, dadurch gekennzeichnet, daß es N-Methylformamid als Lösungsmittel enthält.

8. Coulometrische Wasserbestimmung in einer Einkammer-Zelle nach Karl Fischer gemäß Anspruch 1 unter Verwendung eines Reagenzes, das Schwefeldioxid, eine oder mehrere Basen und ein Jodid enthält, dadurch gekennzeichnet, daß N-Methylformamid als Lösungsmittel enthalten ist.

9. Wasserbestimmung nach einem der Ansprüche 1 bis 8, dadurch gekennzeichnet, daß neben N-Methylformamid auch andere Lösungsmittel mitverwendet werden.

10. Wasserbestimmung nach Anspruch 9, dadurch gekennzeichnet, daß neben N-Methylformamid Alkohole oder Kohlenwasserstoffe als Lösungsmittel mitverwendet werden.

## Claims

1. Determination of water by the Karl Fischer method, characterized in that N-methylformamide is used as solvent.

2. Determination of water using a single-component Karl Fischer reagent according to claim 1, characterized in that N-methylformamide is used as solvent for the reagent.

3. Determination of water using a single-component Karl Fischer reagent according to claim 1, characterized in that N-methylformamide is used as the working medium or solvent for the sample.

4. Determination of water according to claim 1 using a two-component Karl Fischer reagent consisting of a solvent component containing sulphur dioxide and one or more bases, and a titrant component which is an iodine solution, characterized in that the solvent component contains N-methylformamide as solvent.

5. Determination of water according to claim 1 using a two-component Karl Fischer reagent consisting of a solvent component containing sulphur dioxide and one or more bases, and a titrant component which is an iodine solution, characterized in that the titrant component contains N-methylformamide as solvent.

6. Coulometric determination of water in a two-chamber Karl Fischer cell according to claim 1 using an anode reagent containing sulphur dioxide, one or more bases and a soluble iodide, characterized in that the anode reagent contains N-methylformamide as solvent.

7. Coulometric determination of water in a two-chamber Karl Fischer cell according to claim 1 using, in the cathode space, an electrolyte containing one or more soluble conducting salts, characterized in that it contains N-methylformamide as solvent.

8. Coulometric determination of water in a single-chamber Karl Fischer cell according to claim 1 using a reagent containing sulphur dioxide, one or more bases and an iodide, characterized in that N-methylformamide is present as solvent.

9. Determination of water according to one of claims 1 to 8, characterized in that, besides N-methylformamide, other solvents are also used.

10. Determination of water according to claim 9, characterized in that, besides N-methylformamide, alcohols or hydrocarbons are also used as solvent.

## Revendications

1. Dosage de l'eau par la méthode de Karl-Fischer, caractérisé en ce que le solvant utilisé est le N-méthylformamide.

2. Dosage de l'eau avec un réactif à un composant de Karl-Fischer selon la revendication 1, caractérisé en ce que le solvant utilisé pour le réactif est le N-méthylformamide.

3. Dosage de l'eau avec un réactif à un composant de Karl-Fischer selon la revendication 1, caractérisé en ce qu'on utilise du N-méthylformamide en tant que fluide de travail ou solvant pour l'échantillon.

4. Dosage de l'eau selon la revendication 1, avec un réactif-à deux composants de Karl-Fischer, constitué d'un composant solvant qui contient du dioxyde de soufre et une ou plusieurs bases, et d'un composant de titrage, qui est une solution d'iode, caractérisé en ce que le composant solvant contient du N-méthylformamide en tant que solvant.

5. Dosage de l'eau selon la revendication 1, avec un réactif à deux composants de Karl-Fischer, constitué d'un composant solvant qui contient du dioxyde de soufre et une ou plusieurs bases, et d'un composant de titrage qui est une solution-d'iode, caractérisé en ce que le composant de titrage contient du N-méthylformamide en tant que solvant.

6. Dosage coulométrique de l'eau dans une cellule à deux compartiments de Karl-Fischer selon la revendication 1, par utilisation d'un réactif anodique contenant du dioxyde de soufre, une ou plusieurs bases et un iodure soluble, caractérisé en ce que le réactif anodique contient du N-méthylformamide en tant que solvant.

7. Dosage coulométrique de l'eau dans une cellule à deux compartiments de Karl-Fischer selon la revendication 1, par utilisation d'un électrolyte dans la chambre cathodique, qui contient un ou plusieurs sels conducteurs solubles, caractérisé en ce qu'il contient du N-méthylformamide en tant que solvant.

8. Dosage coulométrique de l'eau dans une cellule à un compartiment de Karl-Fischer selon la revendication 1, par utilisation d'un réactif qui contient du dioxyde de soufre, une ou plusieurs bases et un iodure, caractérisé en ce que le solvant contenu est le N-méthylformamide.

9. Dosage de l'eau selon l'une des revendications 1 à 8, caractérisé en ce que, outre du N-méthylformamide, on utilise aussi d'autres solvants.

10. Dosage de l'eau selon la revendication 9, caractérisé en ce que, outre du N-méthylformamide, on utilise aussi des alcools ou des hydrocarbures en tant que solvants.
